# EUROPÄISCHE PATENTSCHRIFT

(11) **EP 2 210 011 B1**
(45) Veröffentlichungstag und Bekanntmachung des Hinweises auf die Patenterteilung: **30.11.2011**
(21) Anmeldenummer: 08804640.4
(22) Anmeldetag: 24.09.2008
(51) Int. Cl.: F16D 65/12

(54) **BREMSSCHEIBE**
BRAKE DISC
DISQUE DE FREIN

(30) Priorität: 14.11.2007 DE 102007054393
(43) Veröffentlichungstag der Anmeldung: 28.07.2010
(73) Patentinhaber: Robert Bosch GmbH, 70442 Stuttgart (DE)
(72) Erfinder: MUELLER, Hans-Walter, 35644 Hohenahr-Grossaltenstädten (DE)
(86) Internationale Anmeldenummer: PCT/EP2008/062729
(87) Internationale Veröffentlichungsnummer: WO 2009/062778

(56) Entgegenhaltungen:
- DE-A1- 2 644 223
- DE-A1- 4 332 951
- DE-B- 1 134 409
- DE-U1- 9 309 234

## Beschreibung

### Stand der Technik

Die Erfindung betrifft eine Bremsscheibe, insbesondere belüftete Bremsscheibe mit einem Reibring und einem über Verbindungsglieder mit dem Reibring verbundenen Tragteil insbesondere Scheibentopf.

Aus der DE 43 32 951 A1 ist eine belüftete Bremsscheibe bekannt, die einen Reibring und ein mit Verbindungsgliedern mit dem Reibring verbundenes Tragteil aufweist. Die Verbindungsglieder sind insbesondere als Stifte, Bolzen oder dergleichen ausgebildet und über den Umfang des Tragteils verteilt angeordnet. Die Verbindungsglieder ragen in Aussparungen in die Umfangswand des Reibrings. Bei größeren Bremsmomenten besteht die Gefahr, dass aufgrund der freien Länge der Verbindungsglieder, d. h. aufgrund des Abstandes zwischen Tragteil und Reibring, sich die Verbindungsglieder verbiegen können und sich im Extremfall aus ihrem Sitz lösen können.

Um dies zu verhindern ist aus der DE 26 44 223 A1 eine Bremsscheibe bekannt, bei der am Reibring Fortsätze ausgebildet sind, in die die Verbindungsglieder hineinragen. Zwischen der Stirnseite dieser Fortsätze und dem Umfang des Tragteils besteht ein Spalt, welcher von einem am Tragteil ausgebildeten Überstand umgriffen ist.

Um eine höhere Festigkeit der Verbindung zwischen Tragteil und Reibring zu erreichen, wäre es auch denkbar, die Anzahl der Stifte zu erhöhen. Dadurch würde aber der Eintritt der Kühlluft auf den Reibring verringert und somit die Kühlung negativ beeinträchtigt. Andererseits wäre es auch möglich, die Dicke der Stifte zu erhöhen. Dadurch würden sich aber auch die Aussparungen am Reibring entsprechend verändern. Der Reibring würde somit in seinen Abmessungen dicker werden, was die Gesamtkonstruktion der Bremsscheibe verändern würde. Ein Austausch bei bestehenden Bauverhältnissen wäre somit nicht mehr möglich. Würde man bei einem dickeren Stift hingegen die Baudicke des Reibrings beibehalten, so wäre die Reibringdicke geringer, so dass der Reibring reißen könnte.

### Vorteile der Erfindung

Bei einer Bremsscheibe nach den gattungsbildenden Merkmalen von Anspruch 1 kann es bei sehr kleinen Spaltlängen aufgrund der drei verschiedenen Werkstoffe, wie z. B. Gusseisen für den Reibring, Edelstahl für das Verbindungsglied und Aluminium oder Leichtmetall für den Scheibentopf zu Korrosionsproblemen aufgrund der unterschiedlichen elektrolytischen Potenziale kommen. Mit Hilfe der am Scheibentopf ausgebildeten, die Fortsätze des Reibrings umgreifenden Überstände kann Korrosion verhindert werden. Mit Hilfe eines rostschützenden Mediums insbesondere hochtemperaturbeständigen Gleitmittels im Spalt kann die Korrosionsfestigkeit noch verbessert werden und somit die Lebensdauer der Bremsscheibe erhöht werden. Es kann somit kein Taumittel mehr in den Spalt eindringen. Aufgrund des Fortsatzes kann der Kühlbereich zwischen den beiden Reibringhälften vergrößert werden, da der Stift bereits vom Fortsatz gehalten wird.

### Zeichnung

In der Figur list eine Bremsscheibe in Draufsicht dargestellt,
Figur 2 zeigt einen Teilschnitt A/A durch die Bremsscheibe nach Figur 1 und
Figur 3 einen Teilschnitt durch ein Ausführungsbeispiel, gemäß der Erfindung.

### Beschreibung der Ausführungsbeispiele

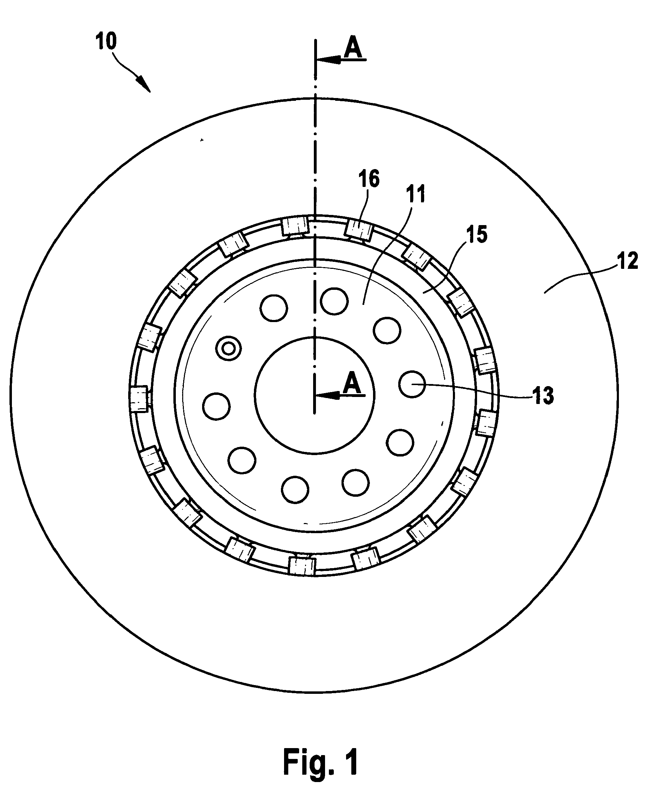

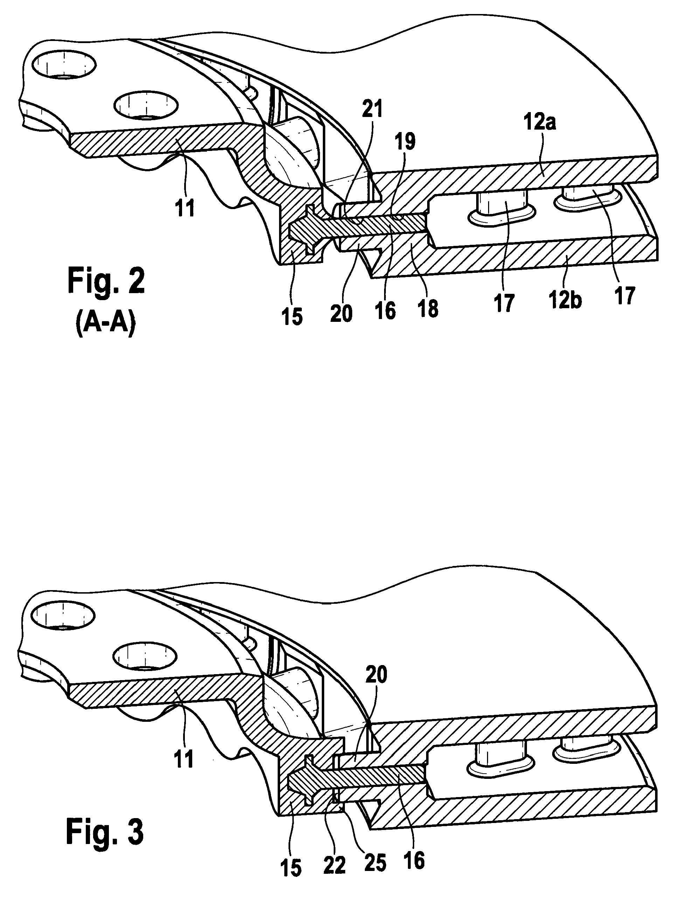

In der Figur 1 ist mit 10 eine Bremsscheibe bezeichnet, die aus einem Scheibentopf 11 und einem Reibring 12 besteht. In bekannter Weise ist der Scheibentopf 11 in hier nicht dargestellter Weise auf eine Nabe eines Fahrzeugs befestigt, wobei die Schrauben zur Befestigung durch die Bohrungen 13 des Scheibentopfs 11 ragen. Über eine Vielzahl von in der Umfangswand 15 des Scheibentopfs 11 eingeformten Verbindungsgliedern in Form von Stiften 16 oder Bolzen oder dergleichen ist der Scheibentopf 11 mit dem Reibring 12 verbunden. Der Reibring 12 besteht aus zwei Reibringhälften 12a und 12b, welche durch eine Vielzahl von über den Umfang verteilten und insbesondere in radialer Richtung verlaufender Stege 17 miteinander verbunden sind, so dass eine belüftete Bremsscheibe entsteht. Abschnittsweise sind Trägerstege 18 im Bereich des inneren Umfangs des Reibrings 12 ausgebildet. Diese Trägerstege 18 weisen eine durchgehende Bohrung 19 zur Aufnahme der Stifte 16 auf. Es wären aber auch Sacklochbohrungen denkbar. Diese Bohrungen 19 sind in den Figuren in der Mittellängsachse des Reibrings 12 ausgebildet. Es wäre aber auch ein Versatz dieser Bohrungen 19 möglich. Die Trägerstege 18 weisen im Bereich der Bohrungen 19 zum Scheibentopf hin ausgebildete Fortsätze 20 auf. Die Fortsätze 20 haben ebenfalls durchgehende Bohrungen 21, die mit den Bohrungen 19 fluchten. Zwischen der Stirnseite der Fortsätze 20 und dem Umfang des Scheibentopfes 12 ist ein kleiner Spalt 22, wie in Figur 3 dargestellt, vorhanden. Der Reibring 12 besteht aus Gusseisen, während der Scheibentopf 11 aus Leichtmetall, insbesondere Aluminium oder Magnesium besteht. Der Stift 16 ist aus Edelstahl, insbesondere nichtrostendem Edelstahl hergestellt. Bei der Herstellung wird zuerst der aus Gusseisen bestehende Reibring 12 hergestellt und die Stifte 16 in die Bohrungen 19 eingesetzt. Anschließend wird der Scheibentopf 11 aufgegossen. Hierbei werden auch die Köpfe der Stifte 16 mit in die Außenwand 15 des Scheibentopfs 11 eingegossen. Hierbei können die Fortsätze 20 auch zum Aufnehmen im Gießwerkzeug für den Scheibentopf 11 mit verwendet werden. Das Aufgießen erfolgt direkt auf die Stirnseiten der Fortsätze 20 des Reibrings 12. Beim Abkühlen des Scheibentopfs 11 entsteht der Spalt 22. Er soll aber so gering wie möglich sein. In der Figur 2 ist der Zustand vor dem Abkühlen des Scheibentopfs 11, also ohne Spalt 22 dargestellt, in Figur 3 der abgekühlte Zustand mit Spalt 22.

Der Reibring 12 ist auf dem Scheibentopf 11 schwimmend gelagert. Dazu müssen die Stifte 16 in den Bohrungen 19 mit relativ geringem Spiel angeordnet sein, so dass sich der Reibring 12 auf den Stiften 16 geringfügig bewegen kann. Dies ist notwendig, da sich beim Bremsvorgang der Reibring 12 erwärmt und geringfügig vom Scheibentopf 11 weg in radialer Richtung ausdehnen.

In der Figur 3 ist eine Abwandlung des Ausführungsbeispiels dargestellt, bei der an der Außenwand 15 des Scheibentopfs 11 ein Überstand 25 ausgebildet ist, der den Fortsatz 20 radial umlaufend umgreift. Der Überstand 25 muss länger als der Spalt 22 sein, insbesondere muss er die durch die thermische Ausdehnung des Reibrings 12 hervorgerufene Spaltvergrößerung mit abdecken. D. h. bei jeder Situation soll der Überstand 25 den sich eventuell vergrößernden Spalt 22 überdecken, insbesondere abdichten. Da aber aufgrund der geringfügigen Relativbewegung zwischen Überstand 25 und Fortsatz 20 keine absolute Dichtheit möglich ist, befindet sich im Spalt 22 ein temperaturfestes Gleitmittel. Dadurch wird einerseits der Gleitprozess des Stiftes in der Bohrung sichergestellt und andererseits wird eine Korrosion durch eventuell in den Spalt eindringendes Taumittel verhindert.

## Patentansprüche

1. Bremsscheibe (10), insbesondere belüftete Bremsscheibe,
mit einem Reibring (12) und einem Tragteil (11),
wobei am Umfang des Tragteils (11) mehrere mit dem Tragteil (11) verbundene Verbindungsglieder (16) vorhanden sind, die in die Umfangswand (18) des Reibrings (12) ragen,
wobei am Reibring (12) Fortsätze (20) ausgebildet sind, in die die Verbindungsglieder (16) ragen, wobei zwischen dem Umfang des Tragteils (11) und der Stirnseiten der Fortsätze (20) ein Spalt (22) vorhanden ist,
wobei an der Außenwand (15) des Tragteils (11) ein Überstand (25) ausgebildet ist, der den Fortsatz (20) radial umgreift und
wobei der Überstand (25) in radialer Richtung länger als der Spalt (22) ist, **dadurch gekennzeichnet**
**dass** die Verbindungsglieder (16) gleitend in den Fortsätzen (20) gelagert sind und dass sich im Spalt (22) ein hochtemperaturfestes, korrosionshemmendes Medium befindet.

2. Bremsscheibe nach Anspruch 1, **dadurch gekennzeichnet, dass** die Fortsätze (20) am Reibring (12) angegossen sind.

3. Bremsscheibe nach Anspruch 1 oder 2, **dadurch gekennzeichnet, dass** das Medium ein Gleitmittel ist.

4. Bremsscheibe nach einem der Ansprüche 1 bis 3, **dadurch gekennzeichnet, dass** der Scheibentopf (11) aus Leichtmetall, insbesondere Aluminium, der Reibring (12) aus Gusseisen und das Verbindungsglied (16) aus Edelstahl besteht.

5. Bremsscheibe nach einem der Ansprüche 1 bis 4, **dadurch gekennzeichnet, dass** das Verbindungsglied (16) ein Stift, Bolzen oder dergleichen ist.

## Claims

1. Brake disc (10), in particular a ventilated brake disc,
comprising a friction ring (12) and a bearing part (11),
wherein a plurality of connecting elements (16) connected to the bearing part (11) are present over the circumference of the bearing part (11) and project into the circumferential wall (18) of the friction ring (12),
wherein extensions (20), into which the connecting elements (16) project, are formed on the friction ring (12),
wherein there is a gap (22) between the circumference of the bearing part (11) and the end faces of the extensions (20),
wherein a protrusion (25) is formed on the outer wall (15) of the bearing part (11) and radially encompasses the extension (20), and
wherein the protrusion (25) is longer in the radial direction than the gap (22),
**characterized**
**in that** the connecting elements (16) are mounted slidingly in the extensions (20), and in that a medium which inhibits corrosion and can withstand high temperatures is located in the gap (22).

2. Brake disc according to Claim 1, **characterized in that** the extensions (20) are cast integrally onto the friction ring (12).

3. Brake disc according to Claim 1 or 2, **characterized in that** the medium is a lubricant.

4. Brake disc according to one of Claims 1 to 3, **characterized in that** the disc chamber (11) consists of light metal, in particular aluminium, the friction ring (12) consists of cast iron and the connecting element (16) consists of high-grade steel.

5. Brake disc according to one of Claims 1 to 4, **characterized in that** the connecting element (16) is a pin, a bolt or the like.

## Revendications

1. Disque de frein (10), en particulier disque de frein ventilé,
comprenant un anneau de friction (12) et une partie portante (11),
plusieurs organes de connexion (16) connectés à la partie portante (11) étant prévus sur la périphérie de la partie portante (11), lesquels font saillie dans la paroi périphérique (18) de l'anneau de friction (12),
des saillies (20) étant réalisées sur l'anneau de friction (12), dans lesquelles saillies pénètrent les organes de connexion (16),
entre la périphérie de la partie portante (11) et les côtés frontaux des saillies (20) étant prévue une fente (22),
une avancée (25) étant réalisée sur la paroi extérieure (15) de la partie portante (11), laquelle avancée vient en prise radialement autour de la saillie (20) et
l'avancée (25) étant plus longue dans la direction radiale que la fente (22),
**caractérisé en ce que**
les organes de connexion (16) sont montés de manière coulissante dans les saillies (20) et
**en ce qu'**un milieu anticorrosion résistant aux hautes températures se trouve dans la fente (22).

2. Disque de frein selon la revendication 1, **caractérisé en ce que** les saillies (20) sont coulées sur l'anneau de friction (12).

3. Disque de frein selon la revendication 1 ou 2, **caractérisé en ce que** le milieu est un lubrifiant.

4. Disque de frein selon l'une quelconque des revendications 1 à 3, **caractérisé en ce que** le dessus du disque (11) se compose de métal léger, en particulier d'aluminium, l'anneau de friction (12) se compose de fonte de fer et l'organe de connexion (16) se compose d'acier spécial.

5. Disque de frein selon l'une quelconque des revendications 1 à 4, **caractérisé en ce que** l'organe de connexion (16) est une goupille, un boulon ou similaire.
